# EUROPÄISCHE PATENTANMELDUNG

(11) **EP 3 263 245 A1**
(43) Veröffentlichungstag der Anmeldung: **03.01.2018**
(21) Anmeldenummer: 16177314.8
(22) Anmeldetag: 30.06.2016
(51) Int. Cl.: B21K 25/00, B21J 15/02, B21J 15/04, B21J 15/14, B23K 20/12, B29C 65/56, F16B 5/08

(54) **NIETVERBINDUNG UND VERFAHREN ZUM HERSTELLEN EINER NIETVERBINDUNG**

(71) Anmelder: Harms & Wende GmbH & Co. KG, 21079 Hamburg (DE)
(72) Erfinder: Luidhardt, Fritz, 20355 Hamburg (DE); Bui, Nguon-Nhan, 21073 Hamburg (DE)
(74) Vertreter: Glawe, Delfs, Moll

(57) **Zusammenfassung**

Die Erfindung betrifft ein Verfahren zum Herstellen einer Nietverbindung zwischen Werkstücken (15, 16), die einen Werkstückstapel (14) bilden. Ein erstes Nietelement (18) wird von einer Seite des Werkstückstapels (14) herangeführt, und ein zweites Nietelement (19) wird von der anderen Seite des Werkstückstapels (14) herangeführt. Das erste Nietelement (18) und das zweite Nietelement (19) werden relativ zueinander gedreht werden, um eine stoffschlüssige Verbindung in einem Kontaktbereich zwischen dem ersten Nietelement (18) und dem zweiten Nietelement (19) herzustellen. Erfindungsgemäß ist der Kontaktbereich von dem Werkstückstapel (14) beabstandet. Die Erfindung betrifft außerdem eine entsprechende Nietverbindung. Durch die Erfindung wird das Risiko von Hitzeschäden an dem Werkstückstapel vermindert.

## Beschreibung

Die Erfindung betrifft ein Verfahren zum Herstellen einer Nietverbindung zwischen einem ersten Werkstück und einem zweiten Werkstück, die so angeordnet sind, dass sie einen Werkstückstapel bilden. Ein erstes Nietelement wird von einer Seite des Werkstückstapels herangeführt. Ein zweites Nietelement wird von der anderen Seite des Werkstückstapels herangeführt. Das erste Nietelement und das zweite Nietelement werden relativ zueinander gedreht, um eine stoffschlüssige Verbindung in einem Kontaktbereich zwischen dem ersten Nietelement und dem zweiten Nietelement herzustellen. Die Erfindung betrifft außerdem einen Werkstückstapel mit einer solchen Nietverbindung.

Nietverbindungen dieser Art umfassen einen Schaft, der sich durch den Werkstückstapel hindurch erstreckt, sowie an beiden Enden des Schafts jeweils einen Kopf, der einen größeren Durchmesser hat als der Schaft. Es ist bekannt, eine solche Nietverbindung durch Druck und Rotation aus zwei Nietelementen zu erzeugen, US 3,477,115. Die Verbindung zwischen den beiden Nietelementen wird als stoffschlüssige Verbindung erzeugt, indem durch die Rotation der Nietelemente eine Reibung zwischen den Nietelementen erzeugt wird, so dass das Material der Nietelemente in einen Zustand versetzt wird, in dem sich eine direkte Verbindung zwischen den beiden Nietelementen ergibt.

Durch die Reibung zwischen den Nietelementen entsteht Wärme. Es besteht die Gefahr, dass die Werkstücke durch den Wärmeeinfluss beschädigt werden. Dies gilt insbesondere, wenn es sich um Werkstücke aus einem hitzeempfindlichen Material handelt, wie beispielsweise CFK.

Der Erfindung liegt die Aufgabe zugrunde, eine Nietverbindung und ein Verfahren zum Herstellen einer Nietverbindung vorzustellen, bei denen das Risiko einer Beschädigung der Werkstücke vermindert ist. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren ist der Kontaktbereich von dem Werkstückstapel beabstandet. Kontaktbereich bezeichnet den Bereich, in dem die Nietelemente in Kontakt zueinander stehen, bevor die Umformung der Nietelemente beginnt.

Von dem Kontaktbereich geht die Wärmeentwicklung aus, sobald die Nietelemente unter Druck aneinander reiben. Indem gemäß der Erfindung der Kontaktbereich von dem Werkstückstapel beabstandet ist, ist der Werkstückstapel einem geringeren Wärmeeinfluss ausgesetzt. Das Risiko von Hitzeschäden an dem Werkstückstapel ist vermindert.

Im Bereich der Nietverbindung liegen die Werkstücke übereinander und bilden damit einen Werkstückstapel. Der Werkstückstapel umfasst mindestens zwei Werkstücke. Möglich sind auch Werkstückstapel aus mehr als zwei Werkstücken, beispielsweise aus drei oder vier Werkstücken. Die Werkstücke haben vorzugsweise eine vergleichsweise große Flächenausdehnung und eine geringe Dicke in Axialrichtung. Die Anwendung des Verfahrens ist auch bei andersartig gestalteten Werkstücken möglich. Der Kontaktbereich liegt außerhalb des Werkstückstapels und ist in Axialrichtung der Nietverbindung von dem Werkstückstapel beabstandet.

Die aus den beiden Nietelementen gebildete Nietverbindung erstreckt sich durch den Werkstückstapel hindurch. Die Nietverbindung umfasst einen zentralen Schaft, der an seinen beiden Enden jeweils in einen Kopf übergeht. Als Kopf wird ein Abschnitt der Nietverbindung bezeichnet, der einen größeren Durchmesser hat als der Schaft. Jedes der beiden Nietelemente kann einen vorgeformten Kopf haben. Vorgeformt bedeutet, dass die betreffende Form bereits vor der Durchführung des erfindungsgemäßen Verfahrens ausgebildet ist.

Das erste Nietelement kann einen vorgeformten Schaft umfassen, der dazu bestimmt ist, sich durch den Werkstückstapel hindurch zu erstrecken, um in Kontakt mit einer Kontaktfläche des zweiten Nietelements gebracht zu werden. Durch die Drehung zwischen dem ersten Nietelement und dem zweiten Nietelement kommt es zu Reibung zwischen dem Schaft und dem zweiten Nietelement im Bereich der Kontaktfläche (Kontaktbereich), so dass sich die stoffschlüssige Verbindung direkt zwischen dem Material der beiden Nietelemente ausbildet.

Die Länge des Schafts des ersten Nietelements kann größer sein als die Dicke des Werkzeugstapels in Axialrichtung. Würde man also ein Loch durch den Werkzeugstapel bohren und den Schaft des ersten Nietelements hindurchführen, so würde das Ende des Schafts aus dem Werkstückstapel hervorragen. Der Schaft kann eine Länge haben, die um mindestens 20 %, vorzugsweise um mindestens 50 %, weiter vorzugsweise um mindestens 100 % größer ist als die Dicke des Werkstückstapels.

Der Schaft des ersten Nietelements wird durch den Werkstückstapel hindurch geführt, um das erste Nietelement in Kontakt mit dem zweiten Nietelement zu bringen. Das zweite Nietelement kann eine Kontaktfläche aufweisen, an der das vordere Ende des ersten Nietelements anstößt. Der Abstand zwischen der Kontaktfläche und dem Werkstückstapel kann beispielsweise mindestens 50 %, vorzugsweise mindestens 100 %, weiter vorzugsweise mindestens 200 % der Dicke des Werkstückstapels sein. In absoluten Zahlen kann der Abstand beispielsweise mindestens 1 mm, vorzugsweise mindestens 2 mm, weiter vorzugsweise mindestens 4 mm sein. Die Kontaktfläche des zweiten Nietelements kann senkrecht zu der Richtung ausgerichtet sein, in der das erste Nietelement herangeführt wird.

Das erfindungsgemäße Verfahren wird vorzugsweise so durchgeführt, dass die Kontaktfläche des zweiten Nietelements von dem Werkstückstapel beabstandet ist, wenn das erste Nietelement in Kontakt mit dem zweiten Nietelements kommt. Die axiale Position, die das zweite Nietelement zu diesem Zeitpunkt hat, kann mit der endgültigen Position übereinstimmen, die das zweite Nietelement innerhalb der fertigen Nietverbindung einnimmt. Alternativ ist möglich, dass das zweite Nietelement im Laufe des Verfahrens näher an den Werkstückstapel herangeführt wird.

Das zweite Nietelement kann eine gegenüber der Kontaktfläche vorspringende Anlagefläche aufweisen. Dadurch kann das zweite Nietelement so positioniert werden, dass es mit der Anlagefläche auf der Oberfläche des Werkstückstapel aufliegt, während die Kontaktfläche von dem Werkstückstapel beabstandet ist. Ein Nietelement mit einer solchen Kontaktfläche und einer solchen Anlagefläche hat eigenständigen erfinderischen Gehalt. Das Nietelement kann mit weiteren Merkmalen fortgebildet werden, die im Zusammenhang des zweiten Nietelements beschrieben sind.

Die Kontaktfläche kann im Zentrum des zweiten Nietelements angeordnet sein. Die Anlagefläche kann peripher bezogen auf die Kontaktfläche angeordnet sein. Die Anlagefläche kann sich um die Kontaktfläche herum erstrecken, insbesondere kann die Anlagefläche ringförmig gestaltet sein.

Zwischen dem zweiten Nietelement und dem Werkstückstapel kann ein Aufnahmeraum eingeschlossen sein, wenn das zweite Nietelement auf dem Werkstückstapel aufliegt und das erste Nietelement mit dem zweiten Nietelement in Kontakt kommt. In den Aufnahmeraum kann das Material der Nietelemente ausweichen, das beim Herstellen der Nietverbindung verdrängt wird.

Der Aufnahmeraum kann so bemessen sein, dass er das verdrängte Material vollständig aufnehmen kann. Das Material der Nietelemente kann dann verdrängt werden, ohne dass zugleich Material des Werkstückstapels verdrängt werden muss. Der Aufnahmeraum kann so gestaltet sein, dass das in den Aufnahmeraum verdrängte Material auf Abstand von dem Werkstückstapel gehalten wird. Indem ein direkter Kontakt zwischen dem verdrängten Material der Nietelemente, das aufgrund der Reibung eine sehr hohe Temperatur hat, und dem Werkstückstapel vermieden wird, wird das Risiko von Hitzeschäden an dem Werkstückstapel weiter vermindert.

Um einen solchen Aufnahmeraum zu bilden, kann das zweite Nietelement mit einer Hinterschneidung versehen sein. Bezogen auf die Richtung, in der das erste Nietelement an die Kontaktfläche des zweiten Nietelements herangeführt wird, bildet das zweite Nietelement also zunächst einen schmaleren Bereich, an denen sich ein weiterer Bereich anschließt. Der schmalere Bereich ist so bemessen, dass der Schaft des ersten Nietelements hindurchgeführt werden kann. In dem weiteren Bereich kann sich das verdrängte Material der Nietelemente verteilen.

Zusätzlich oder alternativ dazu kann das zweite Nietelement einen Freiraum umfassen, der gegenüber der Kontaktfläche seitlich benachbart ist und der gegenüber der Kontaktfläche zurückversetzt ist. Der Freiraum kann sich um die Kontaktfläche herum erstrecken, beispielsweise in Form eines ringförmigen Freiraums. Material, das von der Kontaktfläche des zweiten Nietelements verdrängt wird, kann dann in seitlicher Richtung ausweichen. Material, das in dieser Richtung ausweicht, kommt nicht in Kontakt mit dem Werkstückstapel, sodass eine unerwünschte Wärmeübertragung auf den Werkstückstapel unterbleibt.

Vorzugsweise wird während der Drehung der Nietelemente eine Kraft in axialer Richtung auf die Nietelemente ausgeübt, durch die die Nietelemente gegeneinander gedrückt werden. Die Kraft kann zwischen 0 kN und 30 kN frei einstellbar sein. Axiale Richtung bezeichnet die Richtung, in der sich die Nietverbindung durch den Werkstückstapel hindurch erstreckt.

Werden die Nietelemente unter Druck gegeneinander gedreht, so kann es zu einer Verformung der Nietelemente kommen. Um trotz der Verformung eine hinreichende Reibung zwischen den Nietelementen aufrecht zu erhalten, können die Nietelemente während der Rotation nachgeführt werden. Nachführen bedeutet, dass die Nietelemente in axialer Richtung aufeinander zu bewegt werden.

Es kann von Vorteil sein, den Druck in axialer Richtung auch nach dem Ende der Rotation aufrechtzuerhalten, bis das Material der Nietelemente wieder abgekühlt und erstarrt ist. Gegebenenfalls ist es auch möglich, den Druck mit dem Ende der Rotation oder nach dem Ende der Rotation zu erhöhen, um die Nietverbindung zu stauchen.

Beim Herstellen der Nietverbindung können benachbart zu der Nietverbindung ein Niederhalter und ein Gegen-Niederhalter angeordnet werden, die den Werkstückstapel zusammendrücken. Die Kraft des Niederhalters kann beispielsweise zwischen 0 kN und 5 kN frei einstellbar sein. Dadurch kann sichergestellt werden, dass der Werkstückstapel beim Herstellen der Nietverbindung richtig aufeinander liegt. In einer bevorzugten Ausführungsform sind der Niederhalter und/oder der Gegen-Niederhalter temperiert, so dass die Werkstücke im Bereich der Nietverbindung innerhalb eines gewünschten Temperaturbereichs gehalten werden. Insbesondere kann zu diesem Zweck eine Flüssigkeit mit geeigneter Temperatur durch den Niederhalter und/oder den Gegen-Niederhalter geleitet werden.

Die Nietelemente können aus Metall, insbesondere aus Stahl bestehen. Geeignete Stahlsorten sind beispielsweise 19MnB4 , C15 und 42CrMo4. Die beiden Nietelemente können aus einem gleichartigen Material bestehen. Möglich ist auch, dass das erste Nietelement aus einem andersartigen Material besteht als das zweite Nietelement.

Bei Nietelementen aus Metall erwärmt sich das Material durch die Reibung, bis das Material nicht weit unterhalb der Schmelztemperatur in einen plastifizierten Zustand übergeht. Das Material lässt sich in diesem Zustand mit geringer Kraft verformen, so dass es zum Beispiel möglich wird, die beiden Köpfe der Nietverbindung unter Verformung des Materials näher aneinander zu drücken. Sobald die Nietelemente nicht mehr relativ zueinander gedreht werden, kühlt das Material wieder ab und erstarrt. Dabei bildet sich eine weitgehend homogene Verbindung des Materials, durch die die Nietelemente stabil miteinander verbunden sind. Der Vorgang innerhalb des Materials ist vergleichbar mit dem Ablauf beim Reibschweißen. Durch die Abkühlung zieht sich das Material außerdem zusammen, so dass die Nietverbindung eine Kraft in Axialrichtung auf die Werkstücke ausüben kann, so dass der Werkstückstapel zusammen gepresst wird. Dies erhöht die Stabilität der Nietverbindung weiter.

Die Nietelemente werden vorzugsweise mit hoher Drehzahl gegeneinander gedreht. Die Drehzahl kann beispielsweise höher als 8000 U/min, vorzugsweise höher als 12.000 U/min, weiter vorzugsweise höher als 18.000 U/min liegen. Die Drehzahl kann 0 rpm und 30.000 rpm frei einstellbar sein.

Für die Werkstücke kommen unterschiedliche Materialien in Betracht. Es ist möglich, dass die Werkstücke des Werkstückstapels alle aus dem gleichen Material bestehen. Insbesondere ist das erfindungsgemäße Verfahren von Vorteil bei Werkstücken aus unterschiedlichen Materialien, die anderweitig nicht ohne weiteres miteinander verbunden werden können. Beispielsweise kann eines der Materialien ein Metall und das andere ein faserverstärkter Kunststoff sein, insbesondere ein kohlefaserverstärkter Kunststoff (CFK). Jedes der Werkstücke kann aus einem oder mehreren der folgenden Materialien bestehen: Stahl, Aluminium, AluminiumLegierungen, Magnesium, Magnesium-Legierungen, Titan, Titan-Legierung, Kupfer, Kupfer-Legierungen, Plastik, Polymere, Duromere, Faserverbundwerkstoffe, Waben-Sandwich, Metall-Sandwich-Materialien, Leichtbau-Platten, Leichtmetall-Kunststoff-Verbundplatten. Die Werkstücke können eine beliebige Dicke haben. Insbesondere können die Werkstücke des Werkstückstapels unterschiedlich dick sein.

Das erfindungsgemäße Verfahren kann insbesondere dann zur Anwendung kommen, wenn das zu dem zweiten Nietelement benachbarte Werkstück eine hohe Wärmeempfindlichkeit hat, wie sie beispielsweise bei CFK gegeben ist. Das Werkstück, auf dem der Kopf des ersten Nietelements aufliegt, kann aus Metall bestehen, beispielsweise Aluminium. Möglich ist auch die umgekehrte Reihenfolge der Werkstücke.

Der Werkstückstapel kann in einem vorangegangenen Verfahrensschritt mit einer Bohrung versehen werden, die zur Aufnahme der Nietverbindung bestimmt ist. Dies empfiehlt sich insbesondere dann, wenn das Material wenigstens eines der Werkstücke härter ist als das Material des Nietelements. Ist eine zuvor hergestellte Bohrung vorhanden, so kann das erste Nietelement mit seinem Schaft voran in die Bohrung eingeführt werden, so dass der Schaft an dem gegenüberliegenden Nietelement anliegt. Mit der folgenden Rotation können die Nietelemente direkt miteinander verbunden werden.

Bestehen alle Werkstücke des Werkstückstapels aus einem Material, das weicher ist als das Material des Nietelements, so kann das Verfahren ohne Vorbohren durchgeführt werden. Weicheres Material bedeutet, dass das Material sich unter dem Einfluss des rotierenden Nietelements leichter verformt als das Material des Nietelements. Durch seine Rotation kann das Nietelement dann selbst den erforderlichen Kanal durch das Werkstück hindurch erzeugen. Es ist möglich, dass nur eines der Nietelemente in Rotation versetzt wird, um einen Kanal durch den gesamten Werkstückstapel hindurch zu erzeugen.

Unabhängig davon kann auch das erste Nietelement so geformt sein, dass zwischen dem Kopf des Nietelements und der Oberfläche des Werkstückstapels ein Hohlraum eingeschlossen ist, wenn der Kopf auf der Oberfläche des Werkstückstapels aufliegt. Der Hohlraum kann das Material aufnehmen, das verdrängt wird, wenn das Nietelement den Kanal durch den Werkstückstapel erzeugt.

Das Verfahren kann so durchgeführt werden, dass der Kopf des Nietelements auf der Oberfläche des Werkstückstapels aufliegt, wenn die Nietverbindung fertig ist. Ist das Material des Werkstücks weicher als das Material des Nietelements, kann auch so viel Druck in axialer Richtung auf wenigstens eines der Nietelemente ausgeübt werden, dass der Kopf des Nietelements teilweise oder ganz in das Material des Werkstücks eindringt.

Die erfindungsgemäße Nietverbindung kann ergänzt werden mit einer Klebeverbindung. Der Kleber kann zwischen den Werkstücken aufgebracht werden, um den Werkstückstapel noch sicherer miteinander zu verbinden. Möglich ist auch, die Verbindung zwischen den Nietelementen und dem Werkstück durch dazwischen eingebrachten Kleber weiter zu verbessern. Es ist möglich, dass das Nietelement zu diesem Zwecke ganz oder teilweise mit einem Kleber beschichtet ist. Der Kleber kann ein mikroverkapselter Kleber sein. Zusätzlich oder alternativ dazu kann das Nietelement ganz oder teilweise mit einem Kunststoff überzogen sein. Auch andere Beschichtungen, mit denen das Nietelement ganz oder teilweise überzogen wird sind möglich. Auch eine Dichtung und/oder ein Dichtmaterial zwischen der Nietverbindung und dem Werkstückstapel sind möglich.

Um die Nietelemente relativ zueinander zu drehen, wird vorzugsweise ein Werkzeug verwendet, das an den beiden Köpfen der Nietelemente angreift. Vorzugsweise greift das Werkzeug in eine Struktur des Nietelements ein, über die die Drehkraft übertragen wird. Das Werkzeug kann so gestaltet sein, dass es eines der Nietelemente dreht und das andere in Ruhe hält. Möglich ist auch, dass beide Nietelemente gedreht werden. Die Drehung kann gegensinnig sein oder gleichsinnig mit unterschiedlicher Geschwindigkeit. Das Werkzeug kann außerdem den Niederhalter und den Gegen-Niederhalter umfassen, mit denen der Werkstückstapel zusammengedrückt wird. Das Werkzeug kann vorzugsweise so gesteuert werden, dass die Drehung und der Weg in Axialrichtung der Nietelemente einstellbar sind. Zusätzlich können die Drehmomente der Nietelemente, der gemessenen Motorstrom, die beim Nietvorgang ausgeübten Kräfte, die Öffnungsweite des Niederhalters, der Einsinkweg, der Verkürzungswege und/oder die Elementposition einstellbar sein.

Die Werkstücke können vor dem Herstellen der Nietverbindung profiliert werden. Möglich ist auch, dass die Werkstücke vor dem Nietvorgang chemisch und/oder physikalisch und/oder mechanisch und/oder mit einem Laserstrahl vorbehandelt werden.

Das Nietelement kann aus einem hochfesten härteren Material, aus einem Leichtbau-Metall-Material, aus einem nicht metallenen Material oder aus einem Verbund-Material bestehen. Das erste Nietelement kann in vier Teile unterteilt werden, nämlich den Kopf, den oberen Teil des Schafts, unteren Teil des Schafts und die Spitze. Jeder dieser Abschnitte kann unterschiedliche Geometrie und/oder Profilierung haben. Jeder dieser Abschnitte kann unterschiedlich beschichtet sein. Jeder dieser Abschnitte kann mit Kleber überzogen sein. Jeder dieser Abschnitte kann mit einem mikroverkapselten Kleber und/oder Kunststoff überzogen sein. Um elektrochemische Kontaktkorrosion zu vermeiden sollte die beiden Nietelemente beschichtet werden. Ein Beispiel dafür ist eine Cr-Zn-Überzug.

Das Material der Werkzeuge, mit denen an den Nietelementen angegriffen wird, kann beispielsweise ein gehärteter Warmarbeitstahl, ein vergüteter Werkzeugstahl oder ein Hartmetall (WC-Co, Tantal-Niob-Karbid in Submicron-Güte) sein. Der Niederhalter und der Gegen-Niederhalter können aus entsprechenden Materialien bestehen. Außerdem können die Bauteile beschichtet werden, beispielsweise mit einer bei Zerspannwerkzeugen für die Trockenbearbeitung von Stahl üblichen Beschichtung.

Das erste Nietelement und das zweite Nietelement können gleichzeitig oder sequentiell an den Werkstückstapel herangeführt werden. Es können zwei separate Zuführsysteme vorgesehen sein, um die Nietelemente an den Werkstückstapel heranzuführen. Die Nietelemente können auch vorher in sogenannte Elementenmagazinen in einer Magazinladestation geladen werden. Die Magazine werden dann von der Anlage aufgenommen.

Die Erfindung betrifft außerdem einen Werkstückstapel mit einer durch ein solches Verfahren herstellbaren Nietverbindung. Die Nietverbindung umfasst einen Schaft, der sich durch den Werkstückstapel hindurch erstreckt und der einen ersten Kopf und einen zweiten Kopf der Nietverbindung miteinander verbindet. Erfindungsgemäß ist das durch Rotation eines ersten Nietelements relativ zu einem zweiten Nietelements verdrängte Material der Nietelement von dem Werkstückstapel beabstandet.

Der Werkstückstapel kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang des erfindungsgemäßen Werkstückstapels beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung des erfindungsgemäßen Verfahrens;
- Fig. 2:: eine alternative Ausführungsform eines zweiten Nietelements;
- Fig. 3:: eine mit dem Nietelement aus Fig. 2 hergestellte Nietverbindung;
- Fig. 4:: eine alternative Ausführungsform eines zweiten Nietelements;
- Fig. 5:: eine Schnittdarstellung einer Ausführungsform des ersten erfindungsgemäßen Nietelements;
- Fig. 6:: verschiedene Varianten für den Kopfabschnitt des Nietelements aus Fig. 5;
- Fig. 7:: verschiedene Varianten für den Schaftabschnitt des Nietelements aus Fig. 5;
- Fig. 8:: verschiedene Varianten für die Spitze des Nietelements aus Fig. 5;

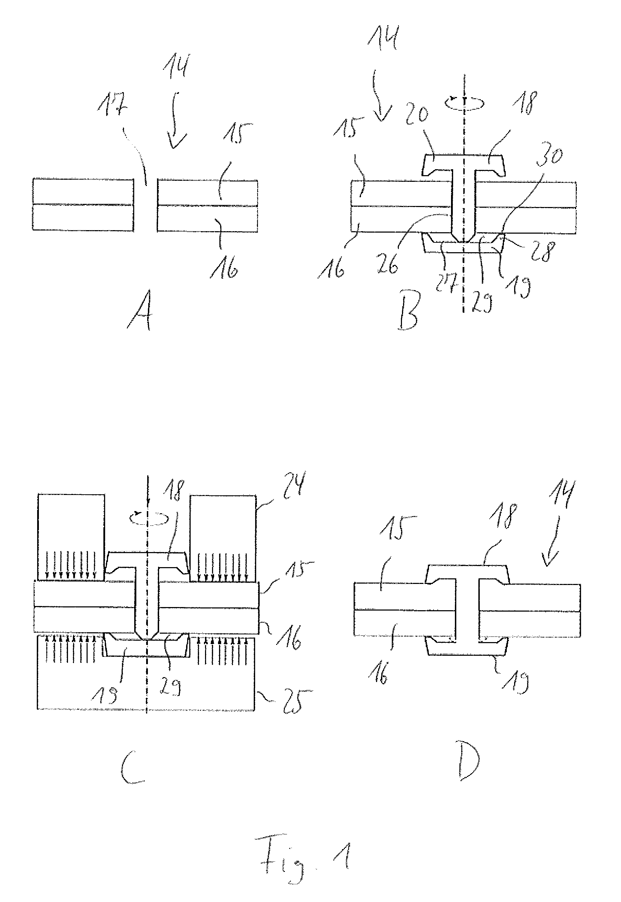

Ein in Fig. 1A gezeigter Werkstückstapel 14 ist zusammengesetzt aus einem ersten Werkstück 15 und einem zweiten Werkstück 16. Das erste Werkstück 15 besteht aus Aluminium, das zweite Werkstück 16 besteht aus kohlefaserverstärktem Kunststoff (CFK). In der dargestellten Ausführungsform erstreckt sich eine Bohrung 17 durch den Werkstückstapel 14 hindurch. Gemäß Figur 1B werden ein erstes Nietelement 18 und ein zweites Nietelement 19 von gegenüberliegenden Seiten an den Werkstückstapel 14 herangeführt. Die Nietelemente 18, 19 bestehen aus herkömmlichem Schraubenstahl, beispielsweise 19MnB4, 42CrMo4 oder C15.

Das erste Nietelement 18 umfasst einen Kopfabschnitt 20 und einen Schaft 26. Die Länge des Schafts 26 ist größer als die Dicke des Werkstückstapels, sodass der Schaft 26 über den Werkstückstapel 14 hinausragt, wenn er bis zum Anschlag in den Werkstückstapel 14 eingesetzt ist, wenn also der Kopfabschnitt 20 an dem oberen Werkstück 15 anliegt. Das zweite Nietelement 19 hat eine Kontaktfläche 27, die von einem umlaufenden Rand 28 umgeben ist. Der Rand 28 umfasst eine Anlagefläche 30, mit der das zweite Nietelement 19 auf dem zweiten Werkstück 16 aufliegt. Durch den Rand 28 wird die Kontaktfläche 27 auf Abstand von dem zweiten Werkstück 16 gehalten. Zwischen der Kontaktfläche 27 und im zweiten Werkstück 16 ist ein Aufnahmeraum 29 eingeschlossen.

Das erste Nietelement 18 ist in Figur 1B mit seiner Spitze voran in die Bohrung 17 eingeführt, so dass der Schaft 26 sich durch die Bohrung 17 hindurch erstreckt. Das zweite Nietelement 19 liegt auf der Oberfläche des Werkstückstapels 14 auf, so dass die Bohrung 17 abgedeckt ist und das zweite Nietelement 19 mittig zu der Bohrung 17 ausgerichtet ist. Die Spitze des ersten Nietelements 18 liegt an der Kontaktfläche 17 des zweiten Nietelements 19 an. Der Kontaktbereich zwischen dem ersten Nietelement 18 und dem zweiten Nietelement 19 ist also von der Werkstückstapel 14 beabstandet.

Gemäß Figur 1C wird ein Niederhalter 24 von oben an den Werkstückstapel 14 herangeführt. Der Niederhalter 24 umgibt das erste Nietelement 18 rundherum, so dass das Nietelement 18 in einer Öffnung des Niederhalters 24 angeordnet ist. Ein Gegen-Niederhalter 25 wird von unten an den Werkstückstapel 14 herangeführt. Der Gegen-Niederhalter 25 hat eine Ausnehmung, die zu dem zweiten Nietelement 19 passt. Die Höhe der Ausnehmung kann entweder mit der Höhe des zweiten Nietelements 19 übereinstimmen oder eine etwas geringere Höhe haben als das zweite Nietelement 19, beispielsweise eine zwischen 0,5 mm und 1 mm geringere Höhe. Hat die Ausnehmung eine geringere Höhe als das zweite Nietelement 19, so, gewinnt die Verbindung zusätzliche Vorspannkraft, indem der Gegen-Niederhalter 25 über das zweite Nietelement 19 eine Kraft auf das Werkstück 16 ausübt. Das zweite Nietelement 19 wird durch den Gegen-Niederhalter 25 in seiner Position gehalten und kann sich weder drehen noch verschoben werden. Durch Pfeile ist angedeutet, dass mit dem Niederhalter 24 und dem Gegen-Niederhalter 25 Druck auf den Werkstückstapel 14 ausgeübt wird, so dass dieser zusammengedrückt wird.

Mit einem nicht dargestellten Werkzeug wird an dem Kopf 20 des ersten Nietelements 18 angegriffen, um das erste Nietelement 18 in Drehung zu versetzen. Der Gegen-Niederhalter 25 bildet zugleich ein Gegen-Werkzeug, so dass das zweite Nietelement 19 in seiner Position bleibt und dass das erste Nietelement 18 sich relativ zu dem zweiten Nietelement 19 dreht. Indem mit dem Werkzeug ein Druck in axialer Richtung auf das Nietelement 18 ausgeübt wird, entsteht in dem Kontaktbereich zwischen dem ersten Nietelement 18 und dem zweiten Nietelement 19 Reibungswärme entsteht. Das Material der Nietelemente 18, 19 wird dadurch im Kontaktbereich auf eine Temperatur nicht weit unterhalb der Schmelztemperatur gebracht, so dass das Material in einen plastifizierten Zustand übergeht. Das erste Nietelement 18 wird während der Drehung in axialer Richtung nachgeführt, so dass das plastifizierte Material in den Aufnahmeraum 29 verdrängt wird, den das zweite Nietelement 19 mit dem Werkstück 16 einschließt. Die Rotation und das Nachführen werden fortgesetzt, bis der Kopf 20 des ersten Nietelements 18 auf der Oberfläche des Werkstücks 15 aufliegt und bis der Aufnahmeraum 29 vollständig mit dem Material der Nietelemente 18, 19 ausgefüllt ist. Die Rotation des ersten Nietelements 18 wird dann gestoppt, wobei der Druck in axialer Richtung aufrecht erhalten bleibt, bis das Material der Nietelement 18, 19 wieder abgekühlt ist und erstarrt ist.

Nach dem Entfernen des Werkzeugs, des Niederhalters 24 und des Gegen-Niederhalters 25 hält die aus den Nietelementen 18, 19 gebildete Nietverbindung die beiden Werkstücke 15, 16 sicher zusammen. Der Endzustand ist in Figur 1D gezeigt. Das erste Nietelement 18 und das zweite Nietelement 19 sind durch eine im Wesentlichen homogene Verbindung aus dem Material der beiden Nietelemente 18, 19 miteinander verbunden. Indem die Reibungswärme in einem von dem Werkstückstapel 14 beabstandeten Kontaktbereich erzeugt wird, werden Hitzeschäden an dem Werkstückstapel 14 und insbesondere an dem zweiten Werkstück 16 vermieden.

Ist das Material der Werkstücke 15, 16 weicher als das Material des ersten Nietelements 18, so kann auf das vorherige Bohren des Lochs 17 verzichtet werden. Stattdessen kann in einer alternativen Ausführungsform des Verfahrens (nicht dargestellt) der Kanal durch den Werkstückstapel 14 mit dem ersten Nietelement 18 selbst erzeugt werden. Dazu wird das erste Nietelement 18 direkt auf die Oberfläche des Werkstücks 15 aufgesetzt. Durch die Drehung des ersten Nietelements 18, den Druck in Axialrichtung und das Nachführen des ersten Nietelements 18 dringt das erste Nietelement 18 in den Werkstückstapel ein und verdrängt dabei das Material der Werkstücke 15, 16.

Um das Risiko von Hitzeschäden an den Werkstücken 15, 16 weiter zu vermindern, können der Niederhalter 24 und der Gegen-Niederhalter 25 gekühlt werden. Es wird dazu eine geeignete temperierte Flüssigkeit durch in Fig. 1 nicht gezeigte Kanäle des Niederhalters 24 und des Gegen-Niederhalters 25 geleitet.

Nach dem Abschluss des Nietvorgangs werden über zwei Zuführsysteme neue Nietelemente 18, 19 zu den Werkzeugen zugeführt, so dass eine weitere Nietverbindung erzeugt werden kann.

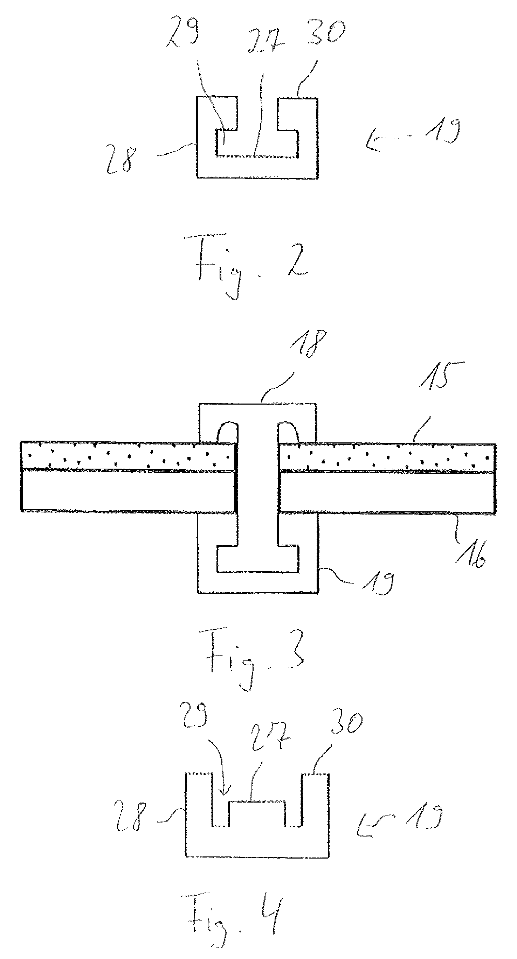

In Fig. 2 ist eine alternative Ausführungsform eines zweiten Nietelements 19 gezeigt, bei der der Abstand in axialer Richtung zwischen der Kontaktfläche 27 und der Anlagefläche 28 größer ist. Die Kontaktfläche 27 hat dadurch einen größeren Abstand von dem zweiten Werkstück 15, wenn das zweite Nietelement 27 auf dem zweiten Werkstück 15 aufliegt. Der Rand 28, der die Kontaktfläche 27 umgibt, ist im Bereich der Anlagefläche 30 nach ihnen verstärkt, sodass sich eine Hinterschneidung ergibt. Die Öffnung in der Anlagefläche ist so bemessen, dass der Schaft 26 des ersten Nietelements 18 gerade hindurch passt. Nahe der Kontaktfläche 27 weitet sich der Aufnahmeraum 29 zur Seite hin auf.

Bei der fertigen Nietverbindung in Fig. 3 füllt das verdrängte Material der Nietelement 18, 19 den Aufnahmeraum 29 vollständig aus. Auch während des Umformvorgangs gibt es keinen direkten Kontakt zwischen dem verdrängten Material und dem zweiten Werkstück 16. Der Werkstückstapel 14 erfährt also nur eine geringe Wärmeeinwirkung.

Bei der in Fig. 4 gezeigten Variante des zweiten Nietelements 19 ist ein zu der Kontaktfläche 27 seitlich benachbarter Bereich gegenüber der Kontaktfläche 27 zurückversetzt. Das bei dem Umformvorgang verdrängte Material der beiden Nietelemente 18, 19 kann in seitlicher Richtung ausweichen. Auch bei dieser Ausführungsform wird ein direkter Kontakt zwischen dem verdrängten Material der Nietelement 18, 19 und dem zweiten Werkstück 16 vermieden.

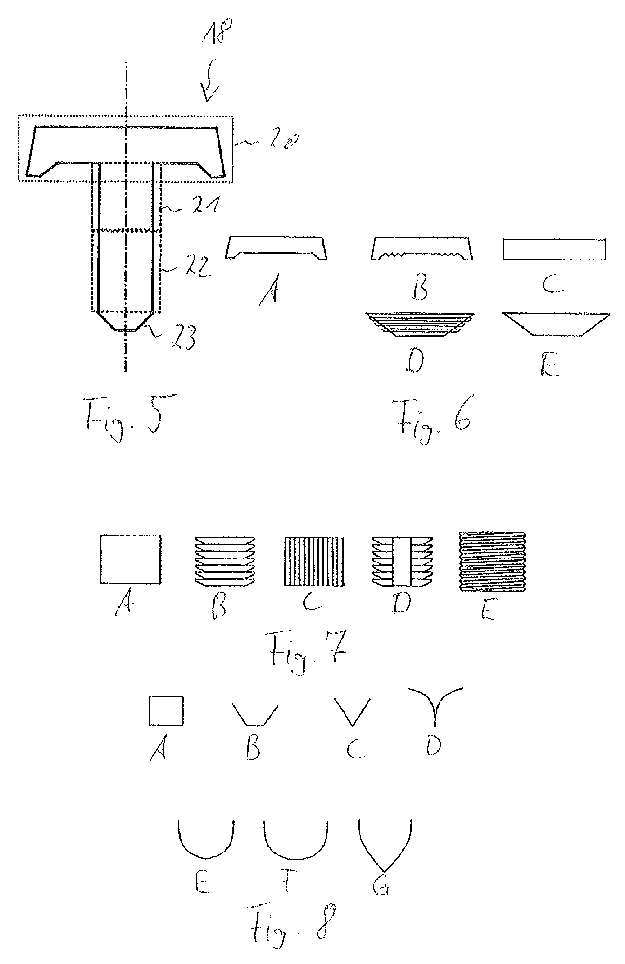

Das erste Nietelement 18 umfasst gemäß der vergrößerten Darstellung der Fig. 5 einen Kopfabschnitt 20, einen oberen Schaftabschnitt 21, einen unteren Schaftabschnitt 22 und einen Spitzenabschnitt 23.

In den Figuren 6 bis 8 sind verschiedene Gestaltungsmöglichkeiten für das erste Nietelement 18 gezeigt. Die Fig. 6 bezieht sich auf Varianten des Kopfabschnitts 20. Fig. 6A zeigt einen Kopf 20, der dazu ausgelegt ist, einen Hohlraum mit dem Werkstück einzuschließen. Die Ausführungsform der Fig. 6B ist zusätzlich mit einer Struktur auf der Innenseite des Kopfes versehen. Figur 6C entspricht dem in Fig. 1 gezeigten Nietelement 18. Die Figuren 6D und 6E zeigen Kopfabschnitte 20, die sich nach unten verjüngen, wobei Figur 6D mit einer Struktur auf der Mantelfläche versehen ist.

In Fig. 7 sind verschiedene Varianten für den oberen Schaftabschnitt 21 bzw. den unteren Schaftabschnitt 22 gezeigt. Die Varianten können in den Schaftabschnitten 21, 22 beliebig miteinander kombiniert werden. In Fig. 7A ist die Außenseite des Schafts flach. Fig. 7B zeigt eine Riffelung in Umfangsrichtung, Fig. 7C eine Riffelung in Längsrichtung. In Fig. 7D sind ausgehend von Figur 7B zusätzlich Sperrrillen in Längsrichtung vorgesehen. In Figur 7E ist ein Gewinde an der Außenseite des Schafts ausgebildet.

Die Fig. 8 zeigt verschiedene Varianten der Spitze. Die Spitze kann stumpf (Fig. 8A), kegelstumpfförmig (Fig. 8B) oder kegelförmig (Fig. 8C) auslaufen. Die Spitze kann in einer Rundung auslaufen (Fig. 8E, 8F), sie kann in einer konkaven Spitze (Fig. 8D) oder einer konvexen Spitze (Fig. 8G) auslaufen.

## Patentansprüche

1. Verfahren zum Herstellen einer Nietverbindung zwischen einen Werkstückstapel (14) bildenden Werkstücken (15, 16), wobei ein erstes Nietelement (18) von einer Seite des Werkstückstapels (14) herangeführt wird und wobei ein zweites Nietelement (19) von der anderen Seite des Werkstückstapels (14) herangeführt wird, wobei das erste Nietelement (18) und das zweite Nietelement (19) relativ zueinander gedreht werden, um eine stoffschlüssige Verbindung in einem Kontaktbereich zwischen dem ersten Nietelement (18) und dem zweiten Nietelement (19) herzustellen, **dadurch gekennzeichnet, dass** der Kontaktbereich von dem Werkstückstapel (14) beabstandet ist.

2. Verfahren nach Anspruch 1, **dadurch gekennzeichnet, dass** die Länge des Schafts (26) des ersten Nietelements (18) größer ist als die Dicke des Werkstückstapels (14), vorzugsweise um wenigstens 20 % größer, weiter vorzugsweise um wenigstens 50 % größer, weiter vorzugsweise um wenigstens 100 % größer.

3. Verfahren nach Anspruch 1 oder 2, **dadurch gekennzeichnet, dass** das zweite Nietelement (19) eine Kontaktfläche (27) aufweist, die von dem Werkstückstapel (14) beabstandet ist, wenn das erste Nietelement (18) in Kontakt mit dem zweiten Nietelements (19) kommt.

4. Verfahren nach Anspruch 3, **dadurch gekennzeichnet, dass** das zweite Nietelement (19) eine gegenüber der Kontaktfläche vorspringende Anlagefläche (30) umfasst.

5. Verfahren nach einem der Ansprüche 1 bis 4, **dadurch gekennzeichnet, dass** zwischen dem zweiten Nietelement (19) und dem Werkstückstapel (14) ein Aufnahmeraum (29) eingeschlossen ist, wenn das zweite Nietelement (19) auf dem Werkstückstapel (14) aufliegt und das erste Nietelement (18) mit dem zweiten Nietelement (19) in Kontakt kommt.

6. Verfahren nach Anspruch 5, **dadurch gekennzeichnet, dass** das in den Aufnahmeraum (29) verdrängte Material auf Abstand von dem Werkstückstapel (14) gehalten wird.

7. Verfahren nach einem der Ansprüche 1 bis 6, **dadurch gekennzeichnet, dass** das zweite Nietelement (19) eine Hinterschneidung in Axialrichtung aufweist.

8. Verfahren nach einem der Ansprüche 1 bis 7, **dadurch gekennzeichnet, dass** das zweite Nietelement (19) einen Freiraum umfasst, der gegenüber der Kontaktfläche (27) seitlich benachbart ist und der gegenüber der Kontaktfläche (27) zurückversetzt ist.

9. Verfahren nach einem der Ansprüche 1 bis 8, **dadurch gekennzeichnet, dass** benachbart zu dem ersten Nietelement (18) ein Niederhalter (24) und benachbart zu dem zweiten Nietelement (19) ein Gegen-Niederhalter (25) angeordnet wird, um den Werkstückstapel (14) zusammenzudrücken, während die Nietverbindung hergestellt wird.

10. Verfahren nach Anspruch 9, **dadurch gekennzeichnet, dass** der Niederhalter (24) und/oder der Gegen-Niederhalter (25) temperiert sind.

11. Verfahren nach einem der Ansprüche 1 bis 10, **dadurch gekennzeichnet, dass** die Werkstücke (15, 16) des Werkstückstapels (14) aus einem weicheren Material bestehen als das Nietelement (18) und dass das Nietelement (18) ohne Vorbohren an den Werkstückstapel (14) herangeführt wird.

12. Verfahren nach einem der Ansprüche 1 bis 11, **dadurch gekennzeichnet, dass** die Nietverbindung ergänzt wird durch eine Klebeverbindung und/oder eine Dichtung.

13. Werkstückstapel mit einer Nietverbindung, wobei die Nietverbindung einen Schaft (26) aufweist, der sich durch den Werkstückstapel (14) hindurch erstreckt und der einen ersten Kopf und einen zweiten Kopf der Nietverbindung miteinander verbindet, wobei die Nietverbindung Material aufweist, das durch Rotation zwischen einem ersten Nietelement (18) und einem zweiten Nietelement (19) verdrängt wurde, **dadurch gekennzeichnet, dass** das verdrängte Material von dem Werkstückstapel (14) beabstandet ist.
